# EUROPEAN PATENT APPLICATION

(11) **EP 3 992 703 A1**
(43) Date of publication of application: **04.05.2022**
(21) Application number: 19930192.0
(22) Date of filing: 28.06.2019
(51) Int. Cl.: G02F 1/1343, G02F 1/1362

(54) **DISPLAY SUBSTRATE AND LIQUID CRYSTAL PANEL**

(71) Applicant: BOE Technology Group Co., Ltd., Beijing 100015 (CN); BEIJING BOE DISPLAY TECHNOLOGY CO., LTD., Beijing 100176 (CN)
(72) Inventor: SU, Qiujie, Beijing 100176 (CN); SHAO, Xibin, Beijing 100176 (CN)
(74) Representative: Santarelli
(86) International application number: PCT/CN2019/093664
(87) International publication number: WO 2020/258242

(57) **Abstract**

The present disclosure provides a display substrate and a liquid crystal panel. The display substrate includes: a substrate; and a common electrode and a pixel electrode array layer which are located on a side of the substrate and are spaced by insulation, wherein the common electrode includes a transparent conductive layer; the pixel electrode array layer includes a plurality of pixel electrode groups arranged in a column direction, wherein each of the pixel electrode groups includes two rows of pixel electrodes, two gate lines extending along a row direction and arranged in the column direction is provided between two adjacent pixel electrode groups, and each of the gate lines is connected to a plurality of thin film transistors, each of the pixel electrodes is connected to one of the thin film transistors; an orthographic projection of a gap, which is between two pixel electrodes adjacent in the column direction of the pixel electrode group, on the substrate falls within an orthographic projection of the common electrode on the substrate.

## Description

### TECHNICAL FIELD

The present disclosure relates to the field of display technology, and particularly to a display substrate and a liquid crystal panel.

### BACKGROUND

Among flat panel display devices, liquid crystal display devices occupy a dominant position in the product market due to their characteristics of small size, low power consumption, relatively low manufacturing cost, no radiation and so on. It has always been an important issue for those skilled in the art how to improve the light leakage among pixels of a liquid crystal display device and thereby improve the display quality.

### SUMMARY

According to an aspect of embodiments of the present disclosure, a display substrate is provided, including:
a substrate; and
a common electrode and a pixel electrode array layer which are located on a side of the substrate and are spaced by insulation, wherein,
the common electrode includes a transparent conductive layer;
the pixel electrode array layer includes a plurality of pixel electrode groups arranged in a column direction, wherein each of the pixel electrode groups includes two rows of pixel electrodes, two gate lines extending along a row direction and arranged in the column direction are provided between two adjacent pixel electrode groups, and each of the gate lines is connected to a plurality of thin film transistors, each of the pixel electrodes is connected to one of the thin film transistors;
an orthographic projection of a gap, which is between two pixel electrodes adjacent in the column direction of the pixel electrode group, on the substrate falls within an orthographic projection of the common electrode on the substrate.

In some embodiments, the common electrode further includes a first common electrode line connected to the transparent conductive layer;
a material of the first common electrode line is a light-shielding metal, and the orthographic projection of the gap, which is between two pixel electrodes adjacent in the column direction of the pixel electrode group, on the substrate falls within an orthographic projection of the first common electrode line on the substrate.

In some embodiments, an electrical conductivity of the first common electrode line is greater than the electrical conductivity of the transparent conductive layer.

In some embodiments, a line width c of the first common electrode line and the gap b between two pixel electrodes adjacent in the column direction of the pixel electrode group satisfy a relationship of 2 micrometers ≦ c - b ≦ 5 micrometers.

In some embodiments, the first common electrode line and the transparent conductive layer are stacked on each other; or the first common electrode line is connected to the transparent conductive layer by a via structure.

In some embodiments, the first common electrode line is located on a side of the transparent conductive layer away from the substrate; or the first common electrode line is located on a side of the transparent conductive layer close to the substrate side.

In some embodiments, the pixel electrodes are located on a side of the transparent conductive layer away from the substrate, wherein the transparent conductive layer includes a plurality of common electrode units which are arranged apart from and connected to each other, the common electrode unit has a planar structure, the pixel electrode has a slit structure, and an orthographic projection of the pixel electrode on the substrate falls within an orthographic projection of the common electrode unit on the substrate.

In some embodiments, the first common electrode line is located on a side of the transparent conductive layer away from the substrate and is stacked on the transparent conductive layer, wherein the first common electrode line is formed in the same layer as the gate lines.

In some embodiments, an orthographic projection of every two pixel electrodes adjacent in the column direction of the pixel electrode group on the substrate falls within an orthographic projection of one of the common electrode units on the substrate.

In some embodiments, at least two common electrode units adjacent in the column direction are connected by a jumper.

In some embodiments, the jumper is formed in the same layer as the pixel electrode, and the jumper is connected to the common electrode unit through a via structure.

In some embodiments, the transparent conductive layer is located on a side of the pixel electrode away from the substrate, wherein the pixel electrode has a planar structure, and the transparent conductive layer has a slit structure;
the orthographic projection of the gap, which is between two pixel electrodes adjacent in the column direction of the pixel electrode group, on the substrate falls within an orthographic projection of a solid portion of the transparent conductive layer on the substrate.

In some embodiments, the common electrode further includes second common electrode lines respectively disposed on opposite sides of two rows of pixel electrodes of the pixel electrode group, wherein the second common electrode lines are connected to the transparent conductive layer.

In some embodiments, the common electrode further includes a third common electrode line disposed between two rows of pixel electrodes of the pixel electrode group, wherein the third common electrode line is connected to the transparent conductive layer.

In some embodiments, two pixel electrodes located in different pixel electrode groups and adjacent in the column direction are respectively connected to sources of the thin film transistors, and drains of the respectively connected thin film transistors are connected as an integrated structure by a connection portion.

In some embodiments, a gate of the thin film transistor is a part of the gate line, and an orthographic projection of the connection portion on the substrate does not overlap with an orthographic projection of the gate line on the substrate.

In some embodiments, the drain of the thin film transistor is U-shaped, and the source of the thin film transistor extends into the U-shaped opening and is spaced apart from the drain;
the U-shaped openings of the drains of the thin film transistors, to which two pixel electrodes located in different pixel electrode groups and adjacent in the column direction are respectively connected, are in opposite directions and connected at the bottom.

According to another aspect of the embodiments of the present disclosure, a liquid crystal panel is provided, including the display substrate according to any one of the foregoing technical solutions.

In some embodiments, the liquid crystal panel further includes a light-shielding matrix having a plurality of light-transmitting regions, wherein an orthographic projection of every two pixel electrodes adjacent in the column direction of the pixel electrode group on the substrate falls within an orthographic projection of one of the light-transmitting regions on the substrate.

### BREIF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:

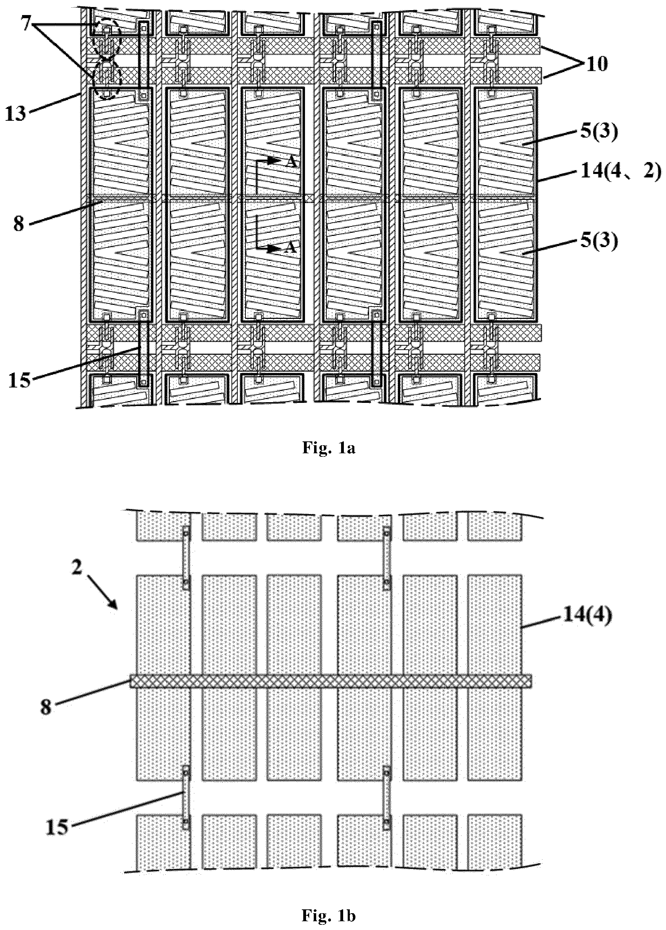

FIG. 1a is a partial top view of a display substrate according to an embodiment of the present disclosure;
FIG. 1b is a partial top view of a common electrode of the display substrate according to an embodiment of the present disclosure;
FIG. 1 c is a schematic cross-sectional view taken at A-A in FIG. 1a;
FIG. 2a is a partial top view of a display substrate according to another embodiment of the present disclosure;
FIG. 2b is a partial top view of a common electrode of the display substrate according to another embodiment of the present disclosure;
FIG. 2c is a schematic cross-sectional view taken at B-B in FIG. 2a;
FIG. 2d is a partial top view of a display substrate according to yet another embodiment of the present disclosure;
FIG. 2e is a schematic cross-sectional view taken at C-C in FIG. 2d;
FIG. 3 is a schematic cross-sectional view of a display substrate at a gap of the pixel electrodes according to a further embodiment of the present disclosure;
FIG. 4 is a top view of a display substrate at a thin film transistor according to an embodiment of the present disclosure;
FIG. 5 is a schematic cross-sectional view of a liquid crystal panel according to an embodiment of the present disclosure.

It should be understood that the dimensions of the various parts shown in the drawings are not drawn to the actual scale. In addition, the same or similar reference signs are used to denote the same or similar components.

### DETAILED DESCRIPTION

Various exemplary embodiments of the present disclosure will now be described in detail with reference to the accompanying drawings. The following description of the exemplary embodiments is in fact merely illustrative and is in no way intended as a limitation to the present disclosure and its application or use. The present disclosure may be implemented in many different forms, not limited to the embodiments described herein. These embodiments are provided so that this disclosure will be thorough and complete, and will fully convey the scope of the disclosure to those skilled in the art. It is noted that, unless specifically stated otherwise, relative arrangement of components and steps, material composition, numerical expressions, and numerical values set forth in these embodiments are to be construed as merely illustrative, and not as a limitation.

The use of the terms "first", "second" or the like in the present disclosure does not denote any order, quantity or importance, but are merely used to distinguish between different components. A word such as "includes" or "comprises" means that the element before the word covers the elements listed after the word, without excluding the possibility of also covering other elements. The terms "up", "down" and the like are used only to represent a relative positional relationship, and the relative positional relationship may be changed if the absolute position of the described object changes.

In the present disclosure, when it is described that a specific component is disposed between a first component and a second component, there may be an intervening component between the specific component and the first component or the second component, or there may be no intervening component therebetween. When it is described that a specific component is connected to other components, the specific component may be directly connected to the other components without an intervening component, or there may be an intervening component without being directly connected with the other components.

Unless otherwise defined, all terms (including technical and scientific terms) used herein have the same meaning as commonly understood by one of ordinary skill in the art to which the disclosure belongs. It will also be understood that terms defined in such general-purpose dictionaries should be interpreted as having a meaning that is consistent with their meaning in the context of the relevant art, and not to be interpreted in an idealized or overly formal sense, unless explicitly defined herein.

Techniques, methods and apparatus known to those of ordinary skill in the relevant art may not be discussed in detail, but where appropriate, these techniques, methods and apparatuses should be considered as part of the specification.

The liquid crystal display device includes a liquid crystal panel and a backlight module located on the back side of the liquid crystal panel. The liquid crystal panel itself does not emit light. In order to display, it is needed for the backlight module to provide backlight. Therefore, the transmittance of the liquid crystal panel is a critical factor affecting the display quality of the liquid crystal display device.

The liquid crystal panel generally includes a display substrate and a counter substrate disposed apart from each other, and a liquid crystal layer located between the display substrate and the counter substrate. Pixel electrodes of the display substrate are disposed in one-to-one correspondence to the sub-pixels of the liquid crystal panel. When a thin film transistor is turned on, a data voltage signal is transmitted on a data line to the pixel electrodes through the thin film transistor. Since a common electrode layer has an equal potential as a whole, a voltage difference is generated between the pixel electrodes and the common electrode, forming an electric field accordingly. The electric field formed by the pixel electrodes and the common electrode controls the deflection of liquid crystal molecules, thereby achieving grayscale display of the sub-pixels of the liquid crystal panel.

When the liquid crystal panel is in operation, a lateral electric field is also formed at the gap between adjacent pixel electrodes due to the difference in potential therebetween. This lateral electric field affects the deflection of nearby liquid crystal molecules, causing light leakage between the sub-pixels of the liquid crystal panel. In the related art, the light leakage is generally blocked by a light-shielding matrix provided on the liquid crystal panel, which affects the aperture ratio of the sub-pixel to a certain extent, and further affects the transmittance of the liquid crystal panel. The aperture ratio refers to the ratio of the light-transmitting region of the sub-pixel to the area of the sub-pixel.

In order to improve the above problem, embodiments of the present disclosure provide a display substrate, a liquid crystal panel, and a liquid crystal display device to increase the aperture ratio of the sub-pixel, thereby improving the transmittance of the liquid crystal panel, and improving the display quality of the liquid crystal display device.

In general, a row direction refers to the horizontal arrangement direction of an array, and a column direction refers to the longitudinal arrangement direction of the array. In the embodiments of the present disclosure, the row and column directions are determined relative to one of the use states of the liquid crystal display device, and should not be understood as absolute horizontal and vertical directions. In addition, in the embodiments of the present disclosure, "connection" refers to an electrical connection.

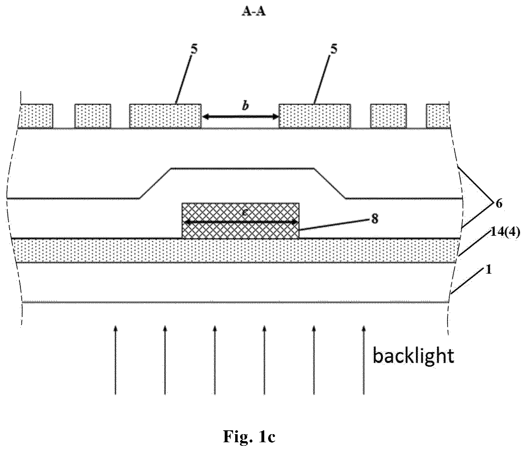

As shown in FIGS. 1a, 1b and 1c, a display substrate according to an embodiment of the present disclosure includes: a substrate 1; and a common electrode 2 and a pixel electrode array layer 3 which are located on a side of the substrate 1 and are spaced by insulation, wherein,
the common electrode 2 includes a transparent conductive layer 4;
the pixel electrode array layer 3 includes a plurality of pixel electrode groups arranged in a column direction, wherein each of the pixel electrode groups includes two rows of pixel electrodes 5, two gate lines 10 extending along a row direction and arranged in the column direction are provided between two adjacent pixel electrode groups, and each of the gate lines 10 is connected to a plurality of thin film transistors 7, each of the pixel electrodes 5 is connected to one of the thin film transistors 7;
an orthographic projection of a gap, which is between two pixel electrodes 5 adjacent in the column direction of the pixel electrode group, on the substrate 1 falls within an orthographic projection of the common electrode 2 on the substrate 1.

In the embodiment of the present disclosure, the specific material of the substrate 1 is not limited, and materials such as glass or transparent resin may be used. The specific materials of the transparent conductive layer 4 and the pixel electrode array layer 3 are not limited, and for example, materials such as indium tin oxide or zinc oxide may be used. The common electrode 2 and the pixel electrode array layer 3 are spaced by insulation via an insulating layer 6.

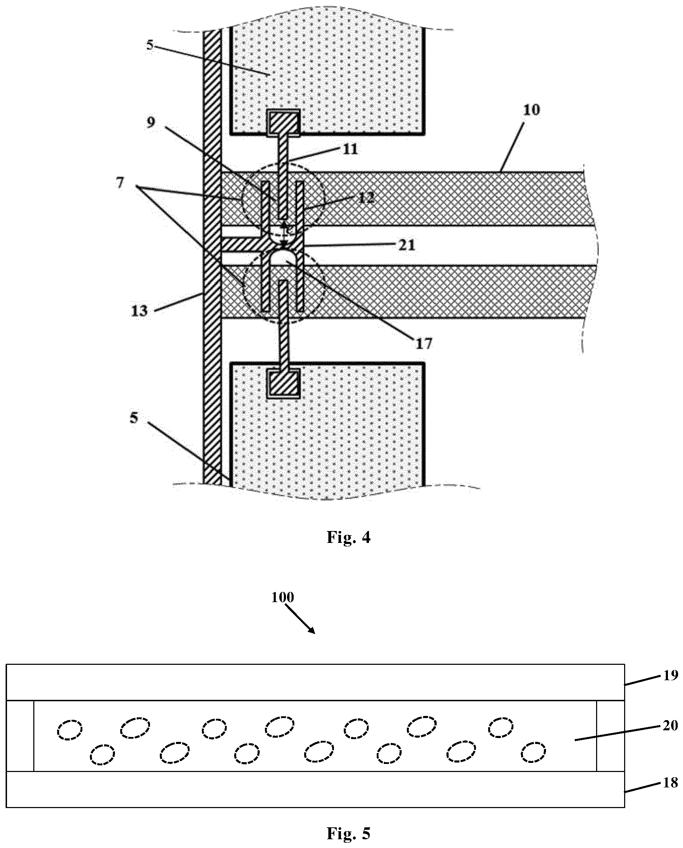

It can be understood that, in order to support the switching function of the thin film transistor 7, in addition to the above structure, the display substrate further includes a data line 13 extending along the column direction and provided on a side of the column of the pixel electrodes. Referring to FIG. 4, a portion of the gate line 10 serves as a gate 9 of the thin film transistor, a drain 12 of the thin film transistor is connected to the data line 13, and a source 11 of the thin film transistor is connected to the pixel electrode 5. The source and the drain as two electrodes of the thin film transistor are only relative terms. Therefore, it is also possible that the source of the thin film transistor may be connected to the data line 13 and the drain of the thin film transistor may be connected to the pixel electrode 5.

As shown in FIG. 1a, in this embodiment, two gate lines 10 are provided between two adjacent pixel electrode groups, and no gate line is provided between two rows of pixel electrodes 5 of the same pixel electrode group. One of the two gate lines 10 is connected to the gates of the thin film transistors 7 corresponding to an upper row of pixel electrodes 5, and the other is connected to the gates of the thin film transistors 7 corresponding to a lower row of pixel electrodes 5.

In the technical solution of the above embodiment of the present disclosure, the thin film transistors and the gate lines connected thereto are provided between two adjacent pixel electrode groups, and no thin film transistors and gate lines are provided between the two rows of pixel electrodes of the same pixel electrode group. In this way, the structure of the thin film transistors and the gate lines on the display substrate may be designed to be more compact, thereby reducing the occupied area on the display substrate. Correspondingly, when designing the light-shielding matrix of the liquid crystal panel, the area of the light-shielding portion thereof may be also reduced accordingly. Therefore, by adopting the technical solution of the above embodiment of the present disclosure, it is possible to increase the area of the light-transmitting region of the sub-pixel, thereby improving the aperture ratio of the sub-pixel.

Referring to FIGS. 1a, 1b and 1c, in some embodiments, the pixel electrodes 5 are located on a side of the transparent conductive layer 4 away from the substrate 1, wherein the transparent conductive layer 4 includes a plurality of common electrode units 14 which are arranged apart from and connected to each other, the common electrode unit 14 has a planar structure, the pixel electrode 5 has a slit structure, and an orthographic projection of the pixel electrode 5 on the substrate 1 falls within an orthographic projection of the common electrode unit 14 on the substrate 1.

When the liquid crystal panel including the display substrate of this embodiment is in operation, an electric field is generated at the edge of the slit structure of the pixel electrodes 5, and an electric field is also generated between the pixel electrodes 5 and the common electrode units 14, thereby forming a multi-dimensional electric field. The multi-dimensional electric field can deflect most liquid crystal molecules of the liquid crystal layer, thereby improving the working efficiency and the transmittance of the liquid crystal panel. The liquid crystal display device adopting this display substrate has better picture quality, and has the characteristics of high resolution, high transmittance, low power consumption, wide viewing angle, high aperture ratio, low chromatic aberration, and no squeeze water ripple effect.

There is no limitation to the specific number of pixel electrodes 5 which are spaced apart from the common electrode unit 14 to generate an electric field, for example, it may be possible that an orthographic projection of one pixel electrode on the substrate falls within the orthographic projection of a common electrode unit on the substrate, or it may be possible that an orthographic projection of two pixel electrodes on the substrate falls within the orthographic projection of a common electrode unit on the substrate, or it may be possible that an orthographic projection of four pixel electrodes on the substrate falls within the orthographic projection of a common electrode unit on the substrate, etc.

As shown in FIGS. 1a, 1b and 1c, the orthographic projection of every two pixel electrodes adjacent in the column direction of the pixel electrode group on the substrate 1 falls within the orthographic projection of one of the common electrode units 14 on the substrate 1. That is, one of the common electrode units 14 is disposed corresponding to two pixel electrodes 5 adjacent in the column direction of the same pixel electrode group. At least two common electrode units 14 adjacent in the column direction are connected by a jumper 15 so that each common electrode unit 14 has an equal potential. In some embodiments, the jumper 15 is formed in the same layer as the pixel electrode 5, and the jumper 15 is connected to the common electrode unit 14 through a via structure. In other embodiments, the jumper 15 may also be formed in the same layer as the common electrode unit.

Referring to FIGS. 1a, 1b and 1c, in some embodiments, the common electrode 2 further includes a first common electrode line 8 connected to the transparent conductive layer 4; the material of the first common electrode line 8 is light-shielding metal, and the orthographic projection of the gap, which is between two pixel electrodes 5 adjacent in the column direction of the pixel electrode group, on the substrate 1 falls within the orthographic projection of the first common electrode line 8 on the substrate 1.

As shown in FIG. 1a, the first common electrode line 8 is disposed between two rows of pixel electrodes 5 of the pixel electrode group and extends along the row direction, which is used to transmit a common voltage signal to the transparent conductive layer 4 more uniformly, thereby reducing the in-plane voltage drop of the transparent conductive layer 4.

In some embodiments, as shown in FIG. 1c, the first common electrode line 8 is located on a side of the transparent conductive layer 4 away from the substrate 1 and is stacked on the transparent conductive layer 4, so that the first common electrode line 8 may be formed in the same layer as the gate lines 10 described above, which makes the manufacturing process of the display substrate easier, and the manufacturing cost is lower.

It is noted that, in the embodiment of the present disclosure, the specific location of the first common electrode line is not limited to that shown in FIG. 1c. In some other embodiments of the present disclosure, the first common electrode line may also be located on a side of the transparent conductive layer close to the substrate. Furthermore, the first common electrode line and the transparent conductive layer may also be connected by a via structure.

Since the material of the first common electrode line 8 is a light-shielding metal, and the orthographic projection of the gap, which is between two pixel electrodes 5 adjacent in the column direction of the pixel electrode group, on the substrate 1 falls within the orthographic projection of the first common electrode line 8 on the substrate 1, the first common electrode line 8 may shield the backlight from the back side of the display substrate, thereby effectively avoiding the light leakage at the gap.

Since the problem of light leakage at the gap is solved, in the design of the light-shielding matrix of the liquid crystal panel, it is not required to provide a light-shielding portion corresponding to the gap, so the aperture ratio of the sub-pixel is improved.

In some embodiments, a line width c of the first common electrode line 8 and the gap b between two pixel electrodes 5 adjacent in the column direction of a pixel electrode group satisfy a relationship of 2 micrometers ≦ c - b ≦ 5 micrometers. Within this range, the first common electrode line 8 has a better shielding effect, and has less influence on the aperture ratio of the sub-pixel. It is relatively easy to control the manufacturing accuracy, and it is beneficial to reducing the manufacturing cost.

In some embodiments, the electrical conductivity of the first common electrode line 8 is greater than the electrical conductivity of the transparent conductive layer 4. In this way, the first common electrode line 8 is connected to the transparent conductive layer 4, which is equivalent to the parallel connection of the first common electrode line 8 and the transparent conductive layer 4, thereby significantly reducing the resistance of the common electrode 2, being beneficial to improve the display delay of the liquid crystal display device, and improving the picture quality.

There is no limitation to the specific material of the first common electrode line 8, for example, a single-layer structure of aluminum neodymium alloy (AINd), aluminum (Al), copper (Cu), molybdenum (Mo), molybdenum-tungsten alloy (MoW), or chromium (Cr) may be used. A composite layer structure composed of any combination of these metal materials may also be used. In some embodiments of the present disclosure, the first common electrode line 8 and the gate lines 10 are made of the same material and are formed in the same layer, which does not increase the process flow and the manufacturing cost of the display substrate.

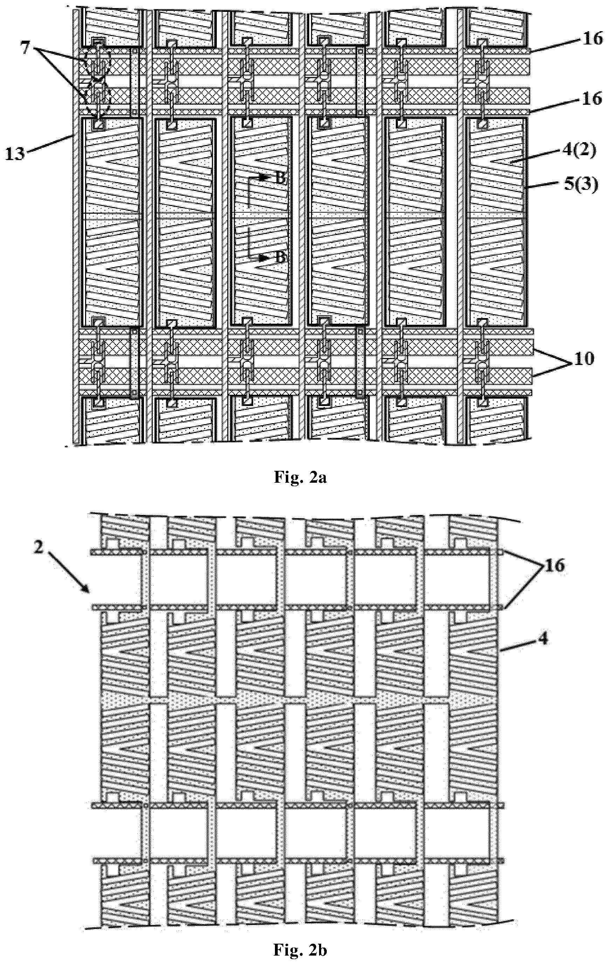

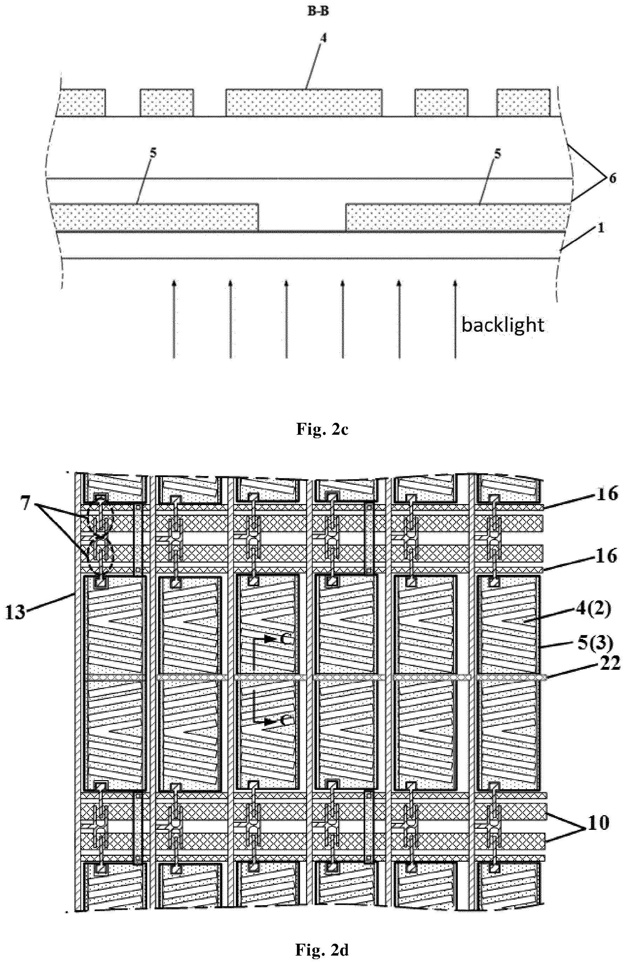

Referring to FIGS. 2a, 2b and 2c, in another embodiment of the present disclosure, the transparent conductive layer 4 is located on a side of the pixel electrode 5 away from the substrate 1, wherein the pixel electrode 5 has a planar structure, and the transparent conductive layer 4 has a slit structure, an orthographic projection of a gap, which is between two pixel electrodes 5 adjacent in the column direction of a pixel electrode group, on the substrate 1 falls within an orthographic projection of a solid part of the transparent conductive layer 4 on the substrate 1.

When the liquid crystal panel including the display substrate of this embodiment is in operation, an electric field is generated at the edge of the slit structure of the transparent conductive layer 4, and an electric field is also generated between the pixel electrode 5 and the transparent conductive layer 4, thereby forming a multi-dimensional electric field, which may improve the working efficiency and the transmittance of the liquid crystal panel, thereby improving the display quality of the liquid crystal display device.

Since the transparent conductive layer 4 is located on a side of the pixel electrode 5 away from the substrate 1, and the orthographic projection of the gap, which is between two pixel electrodes 5 adjacent in the column direction of the pixel electrode group, on the substrate 1 falls within the orthographic projection of the solid part of the transparent conductive layer 4 on the substrate 1, when the liquid crystal panel including this display substrate is in operation, the lateral electric field at the gap described above cannot pass through the transparent conductive layer 4 to affect the deflection of the liquid crystal molecules. In other words, the transparent conductive layer 4 has a shielding effect on the lateral electric field at the gap described above, thereby avoiding the lateral electric field from affecting the deflection of nearby liquid crystal molecules, and effectively improving the light leakage phenomenon.

Since the problem of light leakage at the gap is solved, in the design of the light-shielding matrix of the liquid crystal panel, it is not required to provide a light-shielding portion corresponding to the gap, so the aperture ratio of the sub-pixel is improved.

As shown in FIGS. 2a and 2b, in some embodiments, in addition to the transparent conductive layer 4, the common electrode 2 further includes second common electrode lines 16 respectively disposed on the opposite sides of two rows of pixel electrodes 5 of the pixel electrode group, wherein the second common electrode lines 16 are connected to the transparent conductive layer 4.

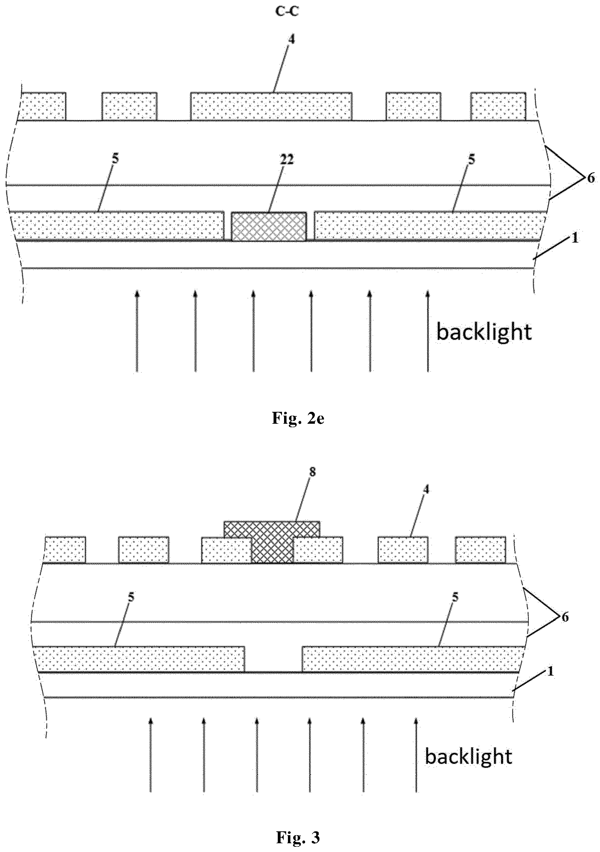

As shown in FIGS. 2d and 2e, in some other embodiments, the common electrode 2 may further include a third common electrode line 22 disposed between two rows of pixel electrodes 5 of the pixel electrode group, wherein the third common electrode line 22 is connected to the transparent conductive layer 4.

The second common electrode lines 16 and the third common electrode line 22 are used to transmit a common voltage signal to the transparent conductive layer 4 more uniformly, thereby reducing the in-plane voltage drop of the transparent conductive layer 4.

The selection of the material of the second common electrode lines 16 and the third common electrode line 22 may refer to the first common electrode line 8 described above. In some embodiments, the second common electrode lines 16 are made of the same material and are formed in the same layer as the gate lines 10 described above, which does not increase the process flow and the manufacturing cost of the display substrate. The second common electrode lines 16 and the third common electrode line 22 are connected to the transparent conductive layer 4 by via structures. There is no limitation to the number of the via structures, which can be specified according to the actual product.

Referring to FIG. 3, in a further embodiment of the present disclosure, the transparent conductive layer 4 is located on a side of the pixel electrode 5 away from the substrate 1, wherein the pixel electrode 5 has a planar structure, and the transparent conductive layer 4 has a slit structure. In this embodiment, the projection of the gap, which is between two pixel electrodes 5 adjacent in the column direction of the pixel electrode group, on the substrate 1 overlaps with the projection of one of the slits of the transparent conductive layer 4 on the substrate 1, and thus the first common electrode line 8 is designed in order to avoid the light leakage from occurring at the pixel gap. The material of the first common electrode line 8 is light-shielding metal, and the orthographic projection of the gap, which is between two pixel electrodes 5 adjacent in the column direction of the pixel electrode group, on the substrate 1 falls within the orthographic projection of the first common electrode line 8 on the substrate 1. Therefore, the first common electrode line 8 may shield the backlight from the back side of the display substrate, thereby effectively avoiding the light leakage at the gap.

For the design of the line width, material or the like of the first common electrode line 8, reference can be made to the above embodiments, which will not be repeated herein.

Referring to FIG. 4, in some embodiments of the present disclosure, two pixel electrodes 5 located in different pixel electrode groups and adjacent to each other in the column direction on the display substrate are respectively connected to the source electrodes 11 of the thin film transistors 7, and the drain electrodes 12 of the thin film transistors 7 to which these two pixel electrodes 5 are respectively connected are connected as an integrated structure by a connection portion 21.

With such a design, the structure design of the display substrate at two adjacent thin film transistors 7 is relatively compact, which is easy to process, and is beneficial to improve the aperture ratio of the sub-pixel.

Continuing to refer to FIG. 4. the structure of the thin film transistor 7 is designed as follows: the drain electrode 12 is U-shaped, the source electrode 11 extends into the U-shaped opening 17 and is spaced apart from the drain electrode 12; the U-shaped openings of drain electrodes of the thin film transistors 7, to which the two pixel electrodes 5 located in different pixel electrode groups and adjacent to each other in the column direction are respectively connected, are in opposite directions and connected at the bottom. There is no limitation to the specific shape of the drain electrode 12, for example, it may be designed to be U-shaped.

In some embodiments of the present disclosure, the distance e between the portion of the source electrode 11 in the opening 17 of the drain electrode 12 and the bottom of the opening 17 satisfies: 2.2 micrometers ≦ e ≦ 2.5 micrometers. With this distance design, when a Single Slit Mask (SSM) is used to form a pattern of the data metal layer, the occurrence of short-circuit between the source electrode 11 and the drain electrode 12 may be effectively reduced.

In some embodiments of the present disclosure, the gate electrode 9 of the thin film transistor 7 is a part of the gate line 10, and the orthographic projection of the connection portion 21 on the substrate 1 does not overlap with the orthographic projection of the gate line 10 on the substrate 1. In this way, the parasitic capacitance between the gate line layer and the data line layer may be reduced, thereby reducing the circuit load and reducing the power consumption of the liquid crystal panel.

As shown in FIG. 5, an embodiment of the present disclosure also provides a liquid crystal panel 100 including the display substrate 18 of any one of the foregoing embodiments. The liquid crystal panel 100 includes a display substrate 18 and a counter substrate 19 which are spaced apart from each other, and a liquid crystal layer 20 between the display substrate 18 and the counter substrate 19. The liquid crystal panel 100 includes a light-shielding matrix (not shown in the figure). There is no limitation to the position of the light-shielding matrix. For example, it may be disposed on the display substrate 18 or the counter substrate 19. The light-shielding matrix has a plurality of light-transmitting regions. The orthographic projection of every two pixel electrodes 5 adjacent in the column direction of the pixel electrode group described above on the substrate 1 falls within the orthographic projection of one of the light-transmitting regions on the substrate 1. That is, every two pixel electrodes 5 adjacent in the column direction are arranged corresponding to one of the light-transmitting regions.

As described above, due to the use of the display substrate of the foregoing embodiment, the transmittance of the liquid crystal panel is high.

An embodiment of the present disclosure also provides a liquid crystal display device, including the liquid crystal panel of the foregoing embodiment. Since the liquid crystal panel has a high transmittance, the liquid crystal display device has better display quality.

There is no limitation to the type of the liquid crystal display device, for example, it may be a display, a tablet computer, a television, an electronic paper, a display screen, and so on.

Heretofore, various embodiments of the present disclosure have been described in detail. In order to avoid obscuring the concepts of the present disclosure, some details known in the art are not described. Based on the above description, those skilled in the art can understand how to implement the technical solutions disclosed herein.

Although some specific embodiments of the present disclosure have been described in detail by way of example, those skilled in the art should understand that the above examples are only for the purpose of illustration and are not intended to limit the scope of the present disclosure. It should be understood by those skilled in the art that the above embodiments may be modified or equivalently substituted for part of the technical features without departing from the scope and spirit of the present disclosure. The scope of the disclosure is defined by the following claims.

## Claims

1. A display substrate, including:
a substrate; and
a common electrode and a pixel electrode array layer which are located on a side of the substrate and are spaced by insulation, wherein,
the common electrode includes a transparent conductive layer;
the pixel electrode array layer includes a plurality of pixel electrode groups arranged in a column direction, wherein each of the pixel electrode groups includes two rows of pixel electrodes, two gate lines extending along a row direction and arranged in the column direction are provided between two adjacent pixel electrode groups, each gate line being connected to a plurality of thin film transistors, and each of the pixel electrodes is connected to one of the thin film transistors;
an orthographic projection of a gap, which is between two pixel electrodes adjacent in the column direction of the pixel electrode group, on the substrate falls within an orthographic projection of the common electrode on the substrate.

2. The display substrate according to claim 1, wherein the common electrode further includes a first common electrode line connected to the transparent conductive layer;
a material of the first common electrode line is a light-shielding metal, and the orthographic projection of the gap, which is between two pixel electrodes adjacent in the column direction of the pixel electrode group, on the substrate falls within an orthographic projection of the first common electrode line on the substrate.

3. The display substrate according to claim 2, wherein an electrical conductivity of the first common electrode line is greater than the electrical conductivity of the transparent conductive layer.

4. The display substrate according to claim 2 or 3, wherein a line width c of the first common electrode line and the gap b between two pixel electrodes adjacent in the column direction of the pixel electrode group satisfy a relationship of 2 micrometers ≦ c - b ≦ 5 micrometers.

5. The display substrate according to any one of claims 2 to 4, wherein the first common electrode line and the transparent conductive layer are stacked on each other; or the first common electrode line is connected to the transparent conductive layer by a via structure.

6. The display substrate according to any one of claims 2 to 5, wherein the first common electrode line is located on a side of the transparent conductive layer away from the substrate; or the first common electrode line is located on a side of the transparent conductive layer close to the substrate side.

7. The display substrate according to any one of claims 2 to 4, wherein the pixel electrodes are located on a side of the transparent conductive layer away from the substrate, wherein the transparent conductive layer includes a plurality of common electrode units which are arranged apart from and connected to each other, the common electrode unit has a planar structure, the pixel electrode has a slit structure, and an orthographic projection of the pixel electrode on the substrate falls within an orthographic projection of the common electrode unit on the substrate.

8. The display substrate according to claim 7, wherein the first common electrode line is located on a side of the transparent conductive layer away from the substrate and is stacked on the transparent conductive layer, wherein the first common electrode line is formed in the same layer as the gate lines.

9. The display substrate according to claim 7 or 8, wherein an orthographic projection of every two pixel electrodes adjacent in the column direction of the pixel electrode group on the substrate falls within an orthographic projection of one of the common electrode units on the substrate.

10. The display substrate according to claim 9, wherein at least two common electrode units adjacent in the column direction are connected by a jumper.

11. The display substrate according to claim 10, wherein the jumper is formed in the same layer as the pixel electrode, and the jumper is connected to the common electrode unit through a via structure.

12. The display substrate according to claim 1, wherein the transparent conductive layer is located on a side of the pixel electrode away from the substrate, wherein the pixel electrode has a planar structure, and the transparent conductive layer has a slit structure;
the orthographic projection of the gap, which is between two pixel electrodes adjacent in the column direction of the pixel electrode group, on the substrate falls within an orthographic projection of a solid portion of the transparent conductive layer on the substrate.

13. The display substrate according to claim 12, wherein the common electrode further includes second common electrode lines respectively disposed on opposite sides of two rows of pixel electrodes of the pixel electrode group, wherein the second common electrode lines are connected to the transparent conductive layer.

14. The display substrate according to claim 12 or 13, wherein the common electrode further includes a third common electrode line disposed between two rows of pixel electrodes of the pixel electrode group, wherein the third common electrode line is connected to the transparent conductive layer.

15. The display substrate according to any one of claims 1 to 14, wherein,
two pixel electrodes located in different pixel electrode groups and adjacent in the column direction are respectively connected to sources of the thin film transistors, and drains of the respectively connected thin film transistors are connected as an integrated structure by a connection portion.

16. The display substrate according to claim 15, wherein,
a gate of the thin film transistor is a part of the gate line, and an orthographic projection of the connection portion on the substrate does not overlap with an orthographic projection of the gate line on the substrate.

17. The display substrate according to claim 15 or 16, wherein,
the drain of the thin film transistor is U-shaped, and the source of the thin film transistor extends into the U-shaped opening and is spaced apart from the drain;
the U-shaped openings of the drains of the thin film transistors, to which two pixel electrodes located in different pixel electrode groups and adjacent in the column direction are respectively connected, are in opposite directions and connected at the bottom.

18. A liquid crystal panel, comprising: the display substrate according to any one of claims 1 to 17.

19. The liquid crystal panel according to claim 18, further including a light-shielding matrix having a plurality of light-transmitting regions, wherein an orthographic projection of every two pixel electrodes adjacent in the column direction of the pixel electrode group falls within an orthographic projection of one of the light-transmitting regions on the substrate.
